# EUROPEAN PATENT APPLICATION

(11) **EP 3 965 280 A1**
(43) Date of publication of application: **09.03.2022**
(21) Application number: 20857579.5
(22) Date of filing: 23.07.2020
(51) Int. Cl.: H02M 3/335

(54) **FLYBACK CONVERTER AND ELECTRONIC DEVICE**

(30) Priority: 23.08.2019 CN 201910783891
(71) Applicant: Huawei Digital Power Technologies Co., Ltd., Shenzhen, Guangdong 518043 (CN)
(72) Inventor: TENG, Yunliang, Shenzhen, Guangdong 518129 (CN); WANG, Chen, Shenzhen, Guangdong 518129 (CN); SHAO, Jincheng, Shenzhen, Guangdong 518129 (CN)
(74) Representative: Epping - Hermann - Fischer
(86) International application number: PCT/CN2020/103872
(87) International publication number: WO 2021/036607

(57) **Abstract**

A flyback converter and an electronic device are provided. A second end of a first secondary winding in a first secondary winding module of the flyback converter is separately coupled to a first electrode of a first output capacitor and a first output terminal, a first end is coupled to a cathode of a first diode, and an anode of the first diode is coupled to a second electrode of the first output capacitor. A first electrode of a second output capacitor in a second secondary winding module is coupled to the second electrode of the first output capacitor, a second electrode is coupled to a second output terminal, an anode of a second diode is coupled to a second end of the second secondary winding, a cathode is coupled to the first electrode of the second output capacitor, an anode of a third diode is coupled to the second electrode of the second output capacitor, and a cathode is coupled to a first end of the second secondary winding. A primary winding is separately magnetically coupled to the two secondary windings. The first output terminal is configured to be coupled to a positive electrode of a first load circuit, and the second output terminal is configured to be coupled to a negative electrode of the first load circuit.

## Description

### CROSS-REFERENCE TO RELATED APPLICATIONS

This application claims priority to Chinese Patent Application No. 201910783891.5, filed with the China National Intellectual Property Administration on August 23, 2019 and entitled "FLYBACK CONVERTER AND ELECTRONIC DEVICE", which is incorporated herein by reference in its entirety.

### TECHNICAL FIELD

This application relates to the field of electronic science and technology, and in particular, to a flyback converter and an electronic device.

### BACKGROUND

A flyback converter is a common electronic component, which may implement a voltage (current) conversion function depending on an internal transformer. For example, converters with different functions such as a direct current-direct current converter, a direct current-alternating current converter, and an alternating current-direct current converter may all be implemented by using the flyback converter. Specifically, the transformer of the flyback converter mainly includes a primary winding and a secondary winding. In a working process of the flyback converter, the primary winding may receive electrical energy input to the flyback converter, and convert the received electrical energy into magnetic potential energy. Due to magnetic coupling between the primary winding and the secondary winding, the magnetic potential energy obtained by the primary winding through the conversion may be transferred from the primary winding to the secondary winding, and converted by the secondary winding into electrical energy output. In this way, electrical energy is transferred from the primary winding to the secondary winding.

However, there are leakage inductance and parasitic capacitance in the primary winding and the secondary winding of the transformer, and a loss caused by the leakage inductance and the parasitic capacitance may usually be equivalent to a parasitic parameter of the transformer. Because the leakage inductance and the parasitic capacitance are adverse to performance enhancement of the transformer, how to reduce the parasitic parameter of the transformer needs to be further studied.

### SUMMARY

In view of this, this application provides a flyback converter and an electronic device, to reduce a parasitic parameter of a transformer in a flyback converter, and help improve energy conversion efficiency of the flyback converter.

According to a first aspect, an embodiment of this application provides a flyback converter, which mainly includes a first output terminal, a second output terminal, a primary winding, a first secondary winding module, and a second secondary winding module. The first secondary winding module mainly includes a first output capacitor, a first secondary winding, and a first diode. A first end of the first secondary winding is coupled to a cathode of the first diode, an anode of the first diode is coupled to a second electrode of the first output capacitor, and a second end of the first secondary winding is separately coupled to a first electrode of the first output capacitor and the first output terminal. The second secondary winding module mainly includes a second output capacitor, a second secondary winding, and a second diode and/or a third diode. A first electrode of the second output capacitor is coupled to the second electrode of the first output capacitor, a second electrode of the second output capacitor is coupled to the second output terminal, an anode of the second diode is coupled to a second end of the second secondary winding, a cathode of the second diode is coupled to the first electrode of the second output capacitor, an anode of the third diode is coupled to the second electrode of the second output capacitor, and a cathode of the third diode is coupled to a first end of the second secondary winding. The primary winding is separately magnetically coupled to the first secondary winding and the second secondary winding. The first output terminal is configured to be coupled to a positive electrode of a first load circuit, and the second output terminal is configured to be coupled to a negative electrode of the first load circuit.

In this embodiment of this application, because the first output capacitor in the first secondary winding module and the second output capacitor in the second secondary winding module are connected in series between the first output terminal and the second output terminal, output voltages of the first secondary winding module and the second secondary winding module can be accumulated, so that the two secondary windings can actually be equivalent to one large secondary winding. In a case of a same output voltage, in this embodiment of this application, because the first secondary winding and the second secondary winding are used in series for output, a quantity of turns of a single secondary winding can be reduced. Because a loss caused by parasitic capacitance and leakage inductance in a secondary winding is proportional to a square of a quantity of turns of the secondary winding, when other parameters are fixed, this embodiment of this application helps reduce the loss caused by the leakage inductance and the parasitic capacitance in the secondary winding. In addition, the first diode in the first secondary winding module not only helps reduce a leakage current inside the first secondary winding module, but also helps reduce a leakage current between the first secondary winding and the first electrode of the second output capacitor, so that introduction of another loss is prevented while the loss caused by the leakage inductance and the parasitic capacitance in the secondary winding is reduced, thereby helping ensure that this embodiment of this application can reduce a parasitic parameter of a transformer as a whole.

In a possible implementation, the flyback converter further includes a first input terminal, a second input terminal, a control module, and a switching transistor. A first end of the primary winding is coupled to the first input terminal, a second end of the primary winding is coupled to a first electrode of the switching transistor, a second electrode of the switching transistor is coupled to the second input terminal, and a control electrode of the switching transistor is coupled to the control module. The first input terminal and the second input terminal are respectively configured to be coupled to a positive electrode and a negative electrode of an external power supply. The control module may control, at a first time point, the switching transistor to conduct a transmission path between the external power supply and the primary winding, and control, at a second time point after the first time point, the switching transistor to disconnect the transmission path between the external power supply and the primary winding.

In a possible implementation, the first diode is a body diode of a first transistor, a control electrode of the first transistor is coupled to the control module, a first electrode of the first transistor is coupled to the first end of the first secondary winding, and a second electrode of the first transistor is coupled to the second electrode of the first output capacitor. The control module may further conduct the first transistor at a third time point. The third time point is not earlier than the second time point.

The body diode of the first transistor is used as the first diode, and the control module conducts the first transistor at the third time point, so that electrical energy output by the secondary winding may be transmitted through a channel inside the first transistor. A loss brought by the channel of the first transistor is less than a loss of a conventional diode. Therefore, this embodiment of this application helps further improve energy conversion efficiency of the flyback converter.

In a possible implementation, the second diode is a body diode of a second transistor, a control electrode of the second transistor is coupled to the control module, a first electrode of the second transistor is coupled to the first electrode of the second output capacitor, and a second electrode of the second transistor is coupled to the second end of the second secondary winding. The control module is further configured to conduct the second transistor at a fourth time point. The fourth time point is not earlier than the second time point. Moreover/alternatively, the third diode is a body diode of a third transistor, a control electrode of the third transistor is coupled to the control module, a first electrode of the third transistor is coupled to the second electrode of the second output capacitor, and a second electrode of the third transistor is coupled to the first end of the second secondary winding. The control module may further conduct the third transistor at the fourth time point.

In a possible implementation, the control module may further obtain a current value of an excitation current flowing through the primary winding; and after the current value of the excitation current decreases to a current threshold, determine that a current time point is the second time point.

In a possible implementation, the flyback converter further includes a sense resistor. One end of the sense resistor is coupled to the second electrode of the switching transistor, the other end of the sense resistor is coupled to the second input terminal, and the control module is further coupled to the both ends of the sense resistor. The control module may obtain a voltage value of a resistance voltage of the sense resistor; and calculate, based on a resistance value of the sense resistor and the voltage value of the resistance voltage of the sense resistor, a current value of a charging current flowing through the sense resistor.

In a possible implementation, the flyback converter further includes at least one third secondary winding module located between the first secondary winding module and the second secondary winding module, and each third secondary winding module includes a third secondary winding, a fourth diode, and a third output capacitor. The first output capacitor, the third output capacitor of the at least one third secondary winding module, and the second output capacitor are successively connected in series, and for each third secondary winding module: the third secondary winding is magnetically coupled to the primary winding, a first end of the third secondary winding is coupled to a cathode of the fourth diode, and a second end of the third secondary winding is coupled to a first electrode of the third output capacitor; an anode of the fourth diode is coupled to a second electrode of the third output capacitor, and the first electrode of the third output capacitor is coupled to the second electrode of the first output capacitor, or the first electrode of the third output capacitor is coupled to a second electrode of a third output capacitor in another third secondary winding module; and the second electrode of the third output capacitor is coupled to the first electrode of the second output capacitor, or the second electrode of the third output capacitor is coupled to a first electrode of a third output capacitor in another third secondary winding module.

Increasing a quantity of secondary windings helps reduce a quantity of turns of a single secondary winding, thereby helping reduce a parasitic parameter of a transformer in the flyback converter.

In a possible implementation, the third secondary winding module further includes a fifth diode, an anode of the fifth diode is coupled to the second end of the third secondary winding, and a cathode of the fifth diode is coupled to the first electrode of the third output capacitor.

The two diodes are disposed in the third secondary winding module, so that a reversed bias voltage of a single diode may be reduced during charging of the primary winding, thereby lowering a requirement on electrical performance of the single diode, and helping reduce costs of the flyback converter and/or improve reliability of the flyback converter. In a possible implementation, the flyback converter further includes a third output terminal, a fourth output terminal, an auxiliary winding, an auxiliary diode, and an auxiliary capacitor. An anode of the auxiliary diode is coupled to a second end of the auxiliary winding, a cathode of the auxiliary diode is coupled to a first electrode of the auxiliary capacitor, a first end of the auxiliary winding is coupled to a second electrode of the auxiliary capacitor, the first electrode of the auxiliary capacitor is coupled to the third output terminal, the second electrode of the auxiliary capacitor is coupled to the fourth output terminal, and the auxiliary winding is magnetically coupled to the primary winding. Alternatively, the anode of the auxiliary diode is coupled to the second electrode of the auxiliary capacitor, the cathode of the auxiliary diode is coupled to the first end of the auxiliary winding, the second end of the auxiliary winding is coupled to the first electrode of the auxiliary capacitor, the first electrode of the auxiliary capacitor is coupled to the third output terminal, the second electrode of the auxiliary capacitor is coupled to the fourth output terminal, and the auxiliary winding is magnetically coupled to the primary winding. The third output terminal is configured to be coupled to a positive electrode of a second load circuit, and the fourth output terminal is configured to be coupled to a negative electrode of the second load circuit.

According to a second aspect, an embodiment of this application provides an electronic device, including a power circuit, a first load circuit, and the flyback converter provided in the first aspect. The power circuit is coupled to a primary winding of the flyback converter, a positive electrode of the first load circuit is coupled to a first output terminal of the flyback converter, and a negative electrode of the first load circuit is coupled to a second output terminal of the flyback converter. The power circuit is configured to input electrical energy to the flyback converter. The flyback converter is configured to convert the electrical energy input by the power circuit, and supply electrical energy obtained after the conversion to the first load circuit through the first output terminal and the second output terminal. According to a third aspect, an embodiment of this application provides an electronic device. The electronic device includes a power circuit, a first load circuit, a second load circuit, and a flyback converter that is provided in the first aspect and that further includes a third output terminal, a fourth output terminal, an auxiliary winding, an auxiliary diode, and an auxiliary capacitor. The power circuit is coupled to a primary winding of the flyback converter, a positive electrode of the first load circuit is coupled to a first output terminal of the flyback converter, a negative electrode of the first load circuit is coupled to a second output terminal of the flyback converter, a positive electrode of the second load circuit is coupled to a third output terminal of the flyback converter, and a negative electrode of the second load circuit is coupled to a fourth output terminal of the flyback converter. The power circuit is configured to input electrical energy to the flyback converter. The flyback converter is configured to convert the electrical energy input by the power circuit, supply some electrical energy obtained after the conversion to the first load circuit through the first output terminal and the second output terminal, and supply other electrical energy obtained after the conversion to the second load circuit through the third output terminal and the fourth output terminal.

These or other aspects of this application are more readily apparent from the following description of embodiments.

### BRIEF DESCRIPTION OF DRAWINGS

FIG. 1 is a schematic structural diagram of an electronic device;
FIG. 2 is a schematic structural diagram of a flyback converter;
FIG. 3 is a schematic diagram of a periodic drive signal;
FIG. 4 is a first schematic structural diagram of a flyback converter according to an embodiment of this application;
FIG. 5 is a second schematic structural diagram of a flyback converter according to an embodiment of this application;
FIG. 6 is a third schematic structural diagram of a flyback converter according to an embodiment of this application; and
FIG. 7 is a fourth schematic structural diagram of a flyback converter according to an embodiment of this application.

### DETAILED DESCRIPTION

The following clearly describes the technical solutions in the embodiments of this application with reference to the accompanying drawings in the embodiments of this application. It should be understood that, in the description of this application, "at least one" means one or more, and "a plurality of' means two or more. In view of this, in the embodiments of this application, "a plurality of' may be understood as "at least two". The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates that a relationship between associated objects is "OR". In addition, it should be understood that, in the description of this application, terms such as "first" and "second" are only used for a purpose of distinguishing descriptions, and cannot be understood as indicating or implying relative importance, or understood as indicating or implying a sequence.

It should be noted that, in the embodiments of this application, "coupling" refers to an energy transfer relationship.

For example, coupling between A and B means that energy can be transferred between A and B. For a specific form of the energy, there are a plurality of possibilities, for example, electrical energy and magnetic potential energy. When electrical energy can be transferred between A and B, it is embodied in a circuit connection relationship that A and B may be electrically connected directly or indirectly by using another conductor or circuit element. When magnetic potential energy can be transferred between A and B, it is embodied in a circuit connection relationship that mutual inductance may occur between A and B, so that the magnetic potential energy can be transferred from Ato B. In view of this, in the embodiments of this application, "magnetic coupling" particularly refers to a scenario in which magnetic potential energy can be transferred between A and B.

Currently, most electronic devices have a converter installed, to implement voltage (or current) conversion inside the electronic device. For example, converters such as a direct current-direct current (DC/DC) converter, a direct current-alternating current (DC/AC) converter, and an alternating current-direct current (AC/DC) converter may implement voltage (or current) conversion in different forms respectively.

Generally, a converter with any function may be implemented by using a flyback converter. For example, when the flyback converter is used as a DC/DC converter, the DC/DC converter may be referred to as a flyback DC/DC converter. Specifically, the flyback converter is a converter architecture, which has a high power density and can support multiple output, and therefore is widely applied to low power supplies.

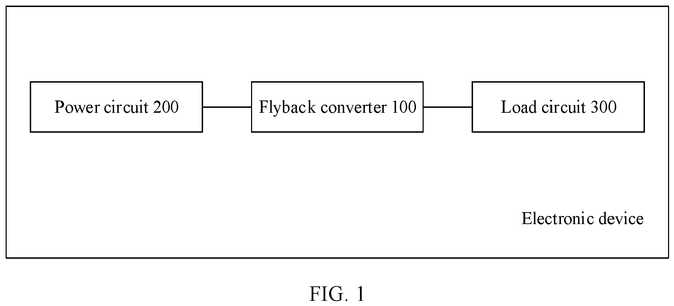

FIG. 1 is a schematic structural diagram of an electronic device in which a flyback converter is installed. The electronic device mainly includes a flyback converter 100, a power circuit 200, and a load circuit 300. One end of the flyback converter 100 is coupled to the power circuit 200, and the other end of the flyback converter 100 is coupled to the load circuit 300. The power circuit 200 may include a battery of the electronic device, or may further include a peripheral circuit of the battery. This is not limited in the embodiments of this application. The power circuit 200 may input electrical energy to the flyback converter 100.

In a working process of the electronic device, the flyback converter 100 may receive the electrical energy input by the power circuit 200, and convert the electrical energy input by the power circuit 200. Specifically, the electrical energy input by the power circuit 200 may be expressed as a specific current value and/or voltage value. For example, the power circuit 200 may use a voltage of 5 V and a current of 2 A, and continuously input electrical energy to the flyback converter for 10s. Then an energy value of the input electrical energy is 1000 J. In this case, the electrical energy input by the power circuit 200 may be expressed as the input voltage of 5 V and/or the input current of 2 A.

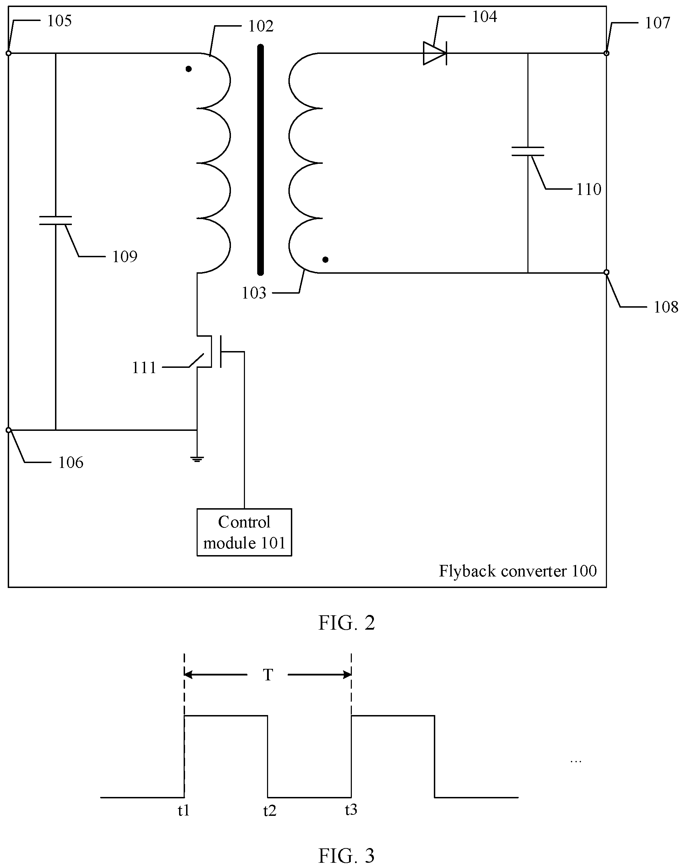

Ideally, if a loss of the flyback converter 100 is not considered, after the conversion of the flyback converter 100, the energy value of the electrical energy input to the flyback converter 100 is equal to an energy value of electrical energy received by the flyback converter, but a voltage value of an output voltage of the flyback converter 100 may be different from the voltage value of the input voltage, that is, voltage conversion is performed, and a current value of an output current of the flyback converter 100 may be different from the current value of the input current, that is, current conversion is performed. For example, in the foregoing example, the energy value of the electrical energy received by the flyback converter 100 is 1000 J. Ideally, the energy value of the electrical energy output by the flyback converter 100 may also be 1000 J, but the voltage value of the output voltage of the flyback converter 100 may be converted to 2 V, the current value of the output current may be converted to 2.5 A, and the electrical energy is continuously output to the load circuit 300 for 20s. The electrical energy obtained after the conversion of the flyback converter 100 may be supplied to the load circuit 300 as output electrical energy of the flyback converter 100, and an output voltage and an output current of the output electrical energy may meet a rated working condition of the load circuit 300, so that the load circuit 300 can complete normal work based on the received output electrical energy. Next, in the embodiments of this application, a flyback converter 100 shown in FIG. 2 is used as an example to further describe a working principle of the flyback converter 100. FIG. 2 is an example of a schematic structural diagram of a flyback converter. In FIG. 2, the flyback converter 100 mainly includes a control module 101, a primary winding 102, a secondary winding 103, a rectifier diode 104, an input terminal 105, an input terminal 106, an output terminal 107, an output terminal 108, an input capacitor 109, and an output capacitor 110.

There is magnetic coupling between the primary winding 102 and the secondary winding 103, and the two may form a transformer. Specifically, a dotted terminal of the primary winding 102 may be shown as a black dot on the primary winding 102 in FIG. 2, and a non-dotted terminal of the primary winding 102 may be the other terminal than the dotted terminal in two terminals of the primary winding 102. A manner of representing a dotted terminal and a non-dotted terminal of the secondary winding 103 is similar to the manner of representing the dotted terminal and the non-dotted terminal of the primary winding 102, and details are not described herein again.

It may be understood that the dotted terminal and the non-dotted terminal are only used to indicate a coil winding direction relationship between the primary winding and the secondary winding, and in a specific implementation process, the dotted terminal and the non-dotted terminal may be interchanged. Specifically, in FIG. 2, the non-dotted terminals of the primary winding 102 and the secondary winding 103 may alternatively serve as dotted terminals, and the dotted terminals of the primary winding 102 and the secondary winding 103 may alternatively serve as non-dotted terminals. For ease of description, the embodiments of this application are described by using the dotted terminal and the non-dotted terminal shown in FIG. 2 as an example. It should be noted that specific representation of the dotted terminal and the non-dotted terminal does not affect specific implementations of the embodiments of this application.

Details are not described again in the embodiments of this application.

On a primary winding side, the dotted terminal of the primary winding 102 is coupled to the input terminal 105, and the non-dotted terminal of the primary winding 102 is coupled to the input terminal 106. The input terminal 105 may be coupled to a positive electrode of the power circuit 200, and the input terminal 106 may be coupled to a negative electrode of the power circuit 200. The non-dotted terminal of the primary winding 102 is further coupled to a first electrode of a switching transistor 111, a control electrode of the switching transistor 111 is coupled to the control module 101, and a second electrode of the switching transistor 111 is coupled to the input terminal 106. In a possible implementation, as shown in FIG. 2, the second electrode of the switching transistor 111 may be further grounded, so that a voltage value of the second electrode is stable at 0 V, to keep an overall voltage on the primary winding side stable. On a secondary winding side, the dotted terminal of the secondary winding 103 is coupled to the output terminal 108, the non-dotted terminal of the secondary winding 103 is coupled to an anode of the rectifier diode 104, and a cathode of the rectifier diode 104 is coupled to the output terminal 107. The output terminal 107 is configured to connect to a positive electrode of the load circuit 300, and the output terminal 108 is configured to connect to a negative electrode of the load circuit 300.

In the flyback converter 100, the control module 101 may be specifically a processor, and the control module 101 may generate a periodic drive signal, so that the switching transistor 111 may be periodically conducted or cut off by using the drive signal. For example, the periodic drive signal may be shown in FIG. 3. In FIG. 3, a conversion period T is included between a time point t1 and a time point t3. Between the time point t1 and a time point t2, the drive signal is at a high level. Between the time point t2 and the time point t3, the drive signal is at a low level. For a specific implementation of the control module 101, refer to a current technology, and details are not described herein.

It is assumed that the switching transistor 111 in FIG. 2 is an N-channel metal oxide semiconductor (negative channel metal oxide semiconductor, NMOS) transistor, a high-level drive signal may conduct the switching transistor 111, and a low-level drive signal may cut off the switching transistor 111. Based on the drive signal shown in FIG. 3, the control module 101 may conduct the switching transistor 111 between the time point t1 and the time point t2, and may cut off the switching transistor 111 between the time point t2 and the time point t3.

Between the time point t1 and the time point t2, the switching transistor 111 is conducted, so that the power circuit 200, the primary winding 102, and the switching transistor 111 form a loop, and an input current supplied by the power circuit 200 flows out from the positive electrode of the power circuit 200 and is input to the flyback converter through the input terminal 105. The input current successively flows through the primary winding 102 and the switching transistor 111, and then flows out from the input terminal 106 and back to the negative electrode of the power circuit 200. In this process, the primary winding 102 may store electrical energy input by the power circuit 200, and a voltage difference between the two terminals of the primary winding 102, that is, a voltage drop of the primary winding 102, gradually increases. It may also be understood that the primary winding 102 converts the received electrical energy into magnetic potential energy. Therefore, the input current flowing through the primary winding may also be referred to as an excitation current or the like.

Due to the magnetic coupling between the primary winding 102 and the secondary winding 103, a voltage drop at the secondary winding 103 also gradually increases. Ideally, a ratio between the voltage drop of the primary winding 102 and the voltage drop of the secondary winding 103 is equal to a ratio between a quantity of turns of the primary winding and a quantity of turns of the secondary winding. However, the rectifier diode 104 is cut off during the time. As a result, the electrical energy stored in the primary winding 102 cannot be transferred to the secondary winding 103, and the voltage drop of the primary winding 102 and the voltage drop of the secondary winding 103 continuously increase.

In addition, as shown in FIG. 2, the flyback converter 100 may further include the input capacitor 109, a first electrode of the input capacitor 109 is coupled to the dotted terminal of the primary winding 102, and a second electrode of the input capacitor 109 is coupled to the non-dotted terminal of the primary winding 102. The input capacitor 109 may filter the input current supplied by the power circuit 200, to filter out a high-frequency noise signal therein, so that the input current supplied to the primary winding 102 is more stable.

Between the time point t2 and the time point t3, the switching transistor 111 is cut off, and the primary winding 102 stops receiving the electrical energy supplied by the power circuit 200. In this case, an anode voltage of the rectifier diode 104 is higher than a cathode voltage, and the rectifier diode 104 is conducted. The primary winding 102 discharges to the secondary winding 103. It may also be understood that the secondary winding 103 further converts the magnetic potential energy obtained through conversion by the primary winding 102 into electrical energy. As shown in FIG. 2, the flyback converter 100 may further include the output capacitor 110. A first electrode of the output capacitor 110 is coupled to the cathode of the rectifier diode 104, and a second electrode of the output capacitor 110 is coupled to the dotted terminal of the secondary winding 103. Between the time point t2 and the time point t3, the secondary winding 103 supplies some electrical energy obtained after the conversion as output electrical energy to the load circuit 300 through the output terminal 107 and the output terminal 108, and stores other electrical energy in the output capacitor 110. The output capacitor 110 may continue to provide output electrical energy to the load circuit 300 during a next period of charging the primary winding 102, so that the flyback converter 100 can continuously provide electrical energy to the load circuit 300.

It may be understood that the control module 101 and the switching transistor 111 in the flyback converter 100 are mainly configured to provide periodic input electrical energy to the primary winding 102. In a possible implementation, if the power circuit 200 has a function of periodically inputting electrical energy, the flyback converter 100 may not include the switching transistor 111 and the control module 101. In this case, the non-dotted terminal of the primary winding 102 may be directly connected to the input terminal 106.

The working principle of the flyback converter 100 has been described ideally above. However, in an actual implementation structure, both the primary winding 102 and the secondary winding 103 have leakage inductance and parasitic capacitance. Between the time point t1 and the time point t2, the leakage inductance and the parasitic capacitance cause the secondary winding 103 to output a leakage inductance current, thereby causing an additional loss and reducing energy conversion efficiency of the flyback converter. Generally, a loss caused by the leakage inductance and the parasitic capacitance may be equivalent to a parasitic parameter of the transformer formed by the primary winding 102 and the secondary winding 103. A larger parasitic parameter of the transformer indicates a larger loss caused by the leakage inductance and the parasitic capacitance, and on the contrary, a smaller parasitic parameter of the transformer indicates a smaller loss caused by the leakage inductance and the parasitic capacitance.

To further reduce the parasitic parameter of the transformer to improve the energy conversion efficiency of the flyback converter, the embodiments of this application provide a flyback converter different from that in FIG. 2. Compared with the flyback converter shown in FIG. 2, in the embodiments of this application, the secondary winding 103 is divided into a plurality of small secondary windings, so that the parasitic parameter of the transformer in the flyback converter can be reduced. Therefore, the flyback converter provided in the embodiments of this application may have higher energy conversion efficiency. Next, the flyback converter provided in the embodiments of this application is further described by using the following embodiments.

It should be noted that the following embodiments are merely possible specific examples. In actual applications, the flyback converter has a plurality of possible implementation structures, which are not enumerated one by one in this application, but all of these flyback converters may be used in this application.

### Embodiment 1

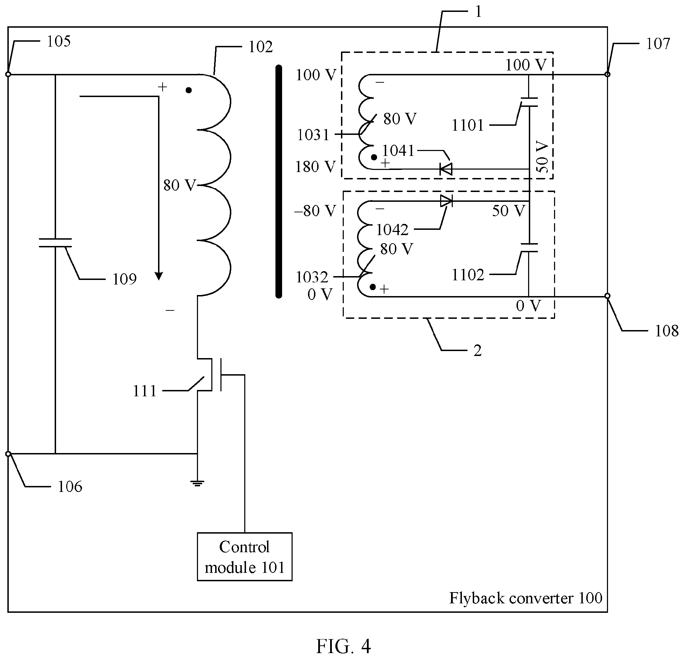

FIG. 4 is an example of a schematic structural diagram of a flyback converter according to an embodiment of this application. As shown in FIG. 4, in the flyback converter 100 provided in this embodiment of this application, a structure on a primary winding side is similar to that in FIG. 2, and details are not described herein again.

On a secondary winding side, there are two secondary winding modules: a secondary winding module 1 and a secondary winding module 2. The secondary winding module 1 includes a secondary winding 1031, a diode 1041, and an output capacitor 1101. A non-dotted terminal of the secondary winding 1031 is separately coupled to a first electrode of the output capacitor 1101 and the output terminal 107, a dotted terminal of the secondary winding 1031 is coupled to a cathode of the diode 1041, and an anode of the diode 1041 is coupled to a second electrode of the output capacitor 1101.

The secondary winding module 2 includes an output capacitor 1102, a secondary winding 1032, and a diode 1042. A first electrode of the output capacitor 1102 is coupled to the second electrode of the output capacitor 1101, and a second electrode of the output capacitor 1102 is coupled to the output terminal 108. It should be noted that, in this embodiment of this application, a specific coupling manner of the diode 1042 in the secondary winding module 2 is not limited. That is, all coupling manners that can implement a rectification function of the diode 1042 may be included in this embodiment of this application.

For example, in a possible implementation, as shown in FIG. 4, an anode of the diode 1042 is coupled to a non-dotted terminal of the secondary winding 1032, a cathode of the diode 1042 is coupled to the first electrode of the output capacitor 1102, and a dotted terminal of the secondary winding 1032 is coupled to the second electrode of the output capacitor 1102. In another possible implementation, the anode of the diode 1042 is coupled to the second electrode of the output capacitor 1102, the cathode of the diode 1042 is coupled to the dotted terminal of the secondary winding 1032, and the non-dotted terminal of the secondary winding 1032 is coupled to the first electrode of the output capacitor 1102. In this implementation, a structure of the secondary winding module 2 is similar to that of the secondary winding module 1. In still another possible implementation, the secondary winding module 2 includes two diodes 1042 (a diode 1042a and a diode 1042b). An anode of the diode 1042a is coupled to the non-dotted terminal of the secondary winding 1032, a cathode of the diode 1042a is coupled to the first electrode of the output capacitor 1102, an anode of the diode 1042b is coupled to the second electrode of the output capacitor 1102, and a cathode of the diode 1042b is coupled to the dotted terminal of the secondary winding 1032.

In this embodiment of this application, both the secondary winding 1031 and the secondary winding 1032 are magnetically coupled to the primary winding 102. For example, the drive signal shown in FIG. 3 is used as an example to further describe the flyback converter 100 shown in FIG. 4.

Between the time point t1 and the time point t2, the primary winding 102 is charged, and an input current flows from the dotted terminal of the primary winding 102 to the non-dotted terminal of the primary winding 102. A direction of the input current may be shown as an arrow in FIG. 4. In this case, the dotted terminal of the primary winding 102 is at a high potential, and the non-dotted terminal of the primary winding 102 is at a low potential. In FIG. 4, "+" is used to represent a high potential and "-" is used to represent a low potential. Correspondingly, the dotted terminal of the secondary winding 1031 is at a high potential, and the non-dotted terminal of the secondary winding 1031 is at a low potential. The dotted terminal of the secondary winding 1032 is at a high potential, and the non-dotted terminal of the secondary winding 1032 is at a low potential.

For example, in a specific scenario, assuming that the primary winding 102, the secondary winding 1031, and the secondary winding 1032 have a same quantity of coil turns, as shown in FIG. 4, and at a time point between t1 and t2, voltage drops of the primary winding 102, the secondary winding 1031, and the secondary winding 1032 are all 80 V. In this case, output voltages of the output capacitor 1101 and the output capacitor 1102 are both 50 V, and the flyback converter 100 may supply an output voltage of 100 V to the load circuit 300. A voltage of the output terminal 108 is 0 V, and a voltage of the output terminal 107 is 100 V.

In this case, a voltage of each node on the secondary winding side may be shown in FIG. 4. A voltage of the dotted terminal of the secondary winding 1032 is 0 V, a voltage of the non-dotted terminal of the secondary winding 1032 is -80 V, a voltage of the first electrode of the output capacitor 1102 is 50 V, and a voltage of the second electrode of the output capacitor 1102 is 0 V. A voltage of the dotted terminal of the secondary winding 1031 is 180 V, a voltage of the non-dotted terminal of the secondary winding 1031 is 100 V, a voltage of the first electrode of the output capacitor 1101 is 100 V, and a voltage of the second electrode of the output capacitor 1101 is 50 V.

Through comparison between the flyback converters 100 shown in FIG. 2 and FIG. 4, it can be learned that a sum of the voltage drops of the two secondary windings in FIG. 4 is 160 V, and a ratio of the sum to the voltage drop of the primary winding 102 is 2:1. If the same ratio is to be reached, in FIG. 2, a ratio between the secondary winding 103 and the primary winding 102 needs to reach 2:1, that is, a quantity of turns of the secondary winding 103 is twice a quantity of turns of the secondary winding 1031 (the same applies to the secondary winding 1032, and details are not described again). Because a loss caused by parasitic capacitance and leakage inductance in a secondary winding is proportional to a square of a quantity of turns of the secondary winding, when other parameters are fixed, a loss caused by the secondary winding 103 is approximately four times a loss caused by the secondary winding 1031, and the loss caused by the secondary winding 103 is approximately twice a total loss caused by the secondary winding 1031 and the secondary winding 1032. It can be learned that, in this application, the secondary winding 103 is divided into the secondary winding 1031 and the secondary winding 1032, and the output voltage of the flyback converter 100 is output by using the two output capacitors connected in series, so that in a case of a same output voltage, a loss on the secondary winding side may be reduced to half a loss on the secondary winding side in FIG. 2, which helps reduce the parasitic parameter of the transformer in the flyback converter 100.

In addition, it can be learned from the voltage of each node in FIG. 4 that the voltage of the dotted terminal of the secondary winding 1031 is higher than the voltage of the first electrode of the output capacitor 1102. However, because the diode 1041 is disposed between the dotted terminal of the secondary winding 1031 and the first electrode of the output capacitor 1102, and in this case, the voltages of the two electrodes of the diode 1041 are reversely biased, and the diode 1041 is cut off, the secondary winding 1031 cannot discharge to the output capacitor 1102. It can be learned that the diode 1041 not only helps reduce a leakage current inside the secondary winding module 1, but also helps reduce a leakage current between the secondary winding 1031 and the output capacitor 1102, so that introduction of another loss is prevented while the parasitic parameter of the transformer is reduced by using a plurality of small windings, thereby ensuring that this embodiment of this application helps reduce the parasitic parameter of the transformer as a whole.

Between the time point t2 and the time point t3, both the secondary winding 1031 and the secondary winding 1032 may output electrical energy. In this case, the diode 1041 and the diode 1042 are conducted, and voltages output by the secondary winding 1031 and the secondary winding 1032 are accumulated, so that the output voltage of the flyback converter 100 is a sum of the voltage output by the secondary winding 1031 and the voltage output by the secondary winding 1032. In other words, in this embodiment of this application, although there are two secondary windings: the secondary winding 1031 and the secondary winding 1032, the secondary winding 1031 and the secondary winding 1032 actually function as one secondary winding (the secondary winding 103), and form a transformer with the primary winding 102.

### Embodiment 2

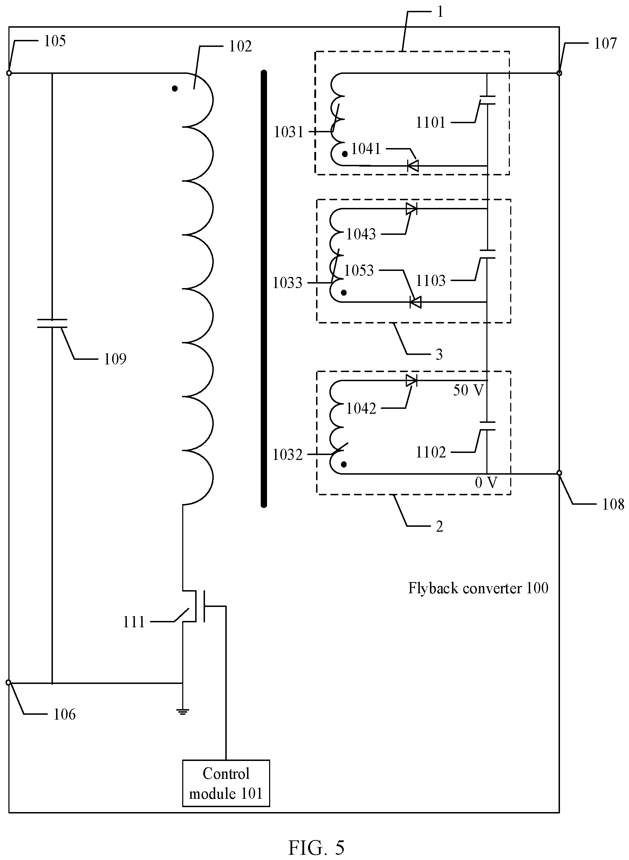

FIG. 5 shows an example of another flyback converter according to an embodiment of this application. A primary winding side of the flyback converter 100 in FIG. 5 is similar to that shown in FIG. 4, and details are not described herein again.

A secondary winding side of the flyback converter 100 shown in FIG. 5 includes a secondary winding module 3 in addition to the secondary winding module 1 and the secondary winding module 2. The secondary winding module 3 includes a secondary winding 1033, a diode 1053, and an output capacitor 1103. The output capacitor 1101, the output capacitor 1103, and the output capacitor 1102 are successively connected in series, and the secondary winding 1033 is magnetically coupled to the primary winding 102. In the secondary winding module 3, a dotted terminal of the secondary winding 1033 is coupled to a cathode of the diode 1053, a non-dotted terminal of the secondary winding 1033 is coupled to a first electrode of the output capacitor 1103, an anode of the diode 1053 is coupled to a second electrode of the output capacitor 1103, and the second electrode of the output capacitor 1103 is coupled to the first electrode of the output capacitor 1102.

A quantity of turns of a single secondary winding may be reduced in a case of a same output voltage by increasing a quantity of secondary windings, so that the parasitic parameter of the transformer in the flyback converter can be further reduced. For example, in a case of a same output voltage, a total loss on the secondary winding side in FIG. 5 is about 1/3 of the loss on the secondary winding side in FIG. 2. Moreover, the diode 1041 not only helps reduce the leakage current inside the secondary winding module 1, but also helps reduce a leakage current between the dotted terminal of the secondary winding 1031 and the output capacitor 1103, and the diode 1053 not only helps reduce a leakage current inside the secondary winding module 3, but also helps reduce a leakage current between the dotted terminal of the secondary winding 1033 and the output capacitor 1102, thereby ensuring that the parasitic parameter of the transformer in the flyback converter can be reduced as a whole.

In a possible implementation, as shown in FIG. 5, the secondary winding module 3 may further include a diode 1043. The diode 1043 is disposed between the non-dotted terminal of the secondary winding 1033 and the first electrode of the output capacitor 1103, an anode of the diode 1043 is coupled to the non-dotted terminal of the secondary winding 1033, and a cathode of the diode 1043 is coupled to the first electrode of the output capacitor 1103. During charging of the primary winding 102, a diode in a secondary winding module needs to bear a high reversed bias voltage. For example, the diode 1041 in FIG. 4 needs to bear a reversed bias voltage of 130 V. Therefore, the diode 1041 is required to have high performance. The same applies to the diode 1053. In view of this, the diode 1043 is added to the secondary winding module 3 to reduce a reversed bias voltage borne by the diode 1053, so that a performance requirement on the diode 1053 may be lowered, thereby helping reduce costs of the flyback converter 100, or helping improve reliability of the flyback converter 100.

It may be understood that, in the secondary winding module 1, a diode having a rectification function may also be disposed between the non-dotted terminal of the secondary winding 1031 and the output capacitor 1101, to reduce the reversed bias voltage of the diode 1041. In the secondary winding module 2, a diode having a rectification function may also be disposed between the dotted terminal of the secondary winding 1032 and the output capacitor 1102, to reduce a reversed bias voltage of the diode 1042. These are not enumerated one by one in this application.

It should be noted that FIG. 5 shows only an example of a scenario of one secondary winding module 3. In another possible implementation, the flyback converter 100 may include a plurality of secondary winding modules 3, to further reduce the parasitic parameter of the transformer in the flyback converter 100. In this case, the output capacitor 1101, output capacitors 1103 of the plurality of secondary winding modules 3, and the output capacitor 1102 are successively connected in series. Each secondary winding module 3 has the same internal structure, and details are not described herein again.

For example, the flyback converter 100 includes two secondary winding modules 3: a secondary winding module 3A and a secondary winding module 3B. A first electrode of an output capacitor 1103A in the secondary winding module 3A is coupled to the second electrode of the output capacitor 1101 in the secondary winding module 1, a second electrode of the output capacitor 1103A is coupled to a first electrode of an output capacitor 1103B in the secondary winding module 3B, and a second electrode of the output capacitor 1103B is coupled to the first electrode of the output capacitor 1102 in the secondary winding module 2.

For another example, the flyback converter 100 includes three secondary winding modules 3: a secondary winding module 3A, a secondary winding module 3B, and a secondary winding module 3C. A first electrode of an output capacitor 1103A in the secondary winding module 3A is coupled to the second electrode of the output capacitor 1101 in the secondary winding module 1, a second electrode of the output capacitor 1103A is coupled to a first electrode of an output capacitor 1103B in the secondary winding module 3B, a second electrode of the output capacitor 1103B is coupled to a first electrode of the output capacitor 1103C in the secondary winding module 3C, and a second electrode of the output capacitor 1103C is coupled to the first electrode of the output capacitor 1102 in the secondary winding module 2.

Specific implementations of other quantities of secondary winding modules 3 may be deduced by analogy, and are not enumerated one by one in this embodiment of this application.

### Embodiment 3

As described above, any secondary winding module includes at least one diode, and the at least one diode is cut off during charging of the primary winding 102 and is conducted during discharging of the primary winding 102. In a possible implementation, a body diode in a transistor may be used as a diode in a secondary winding module.

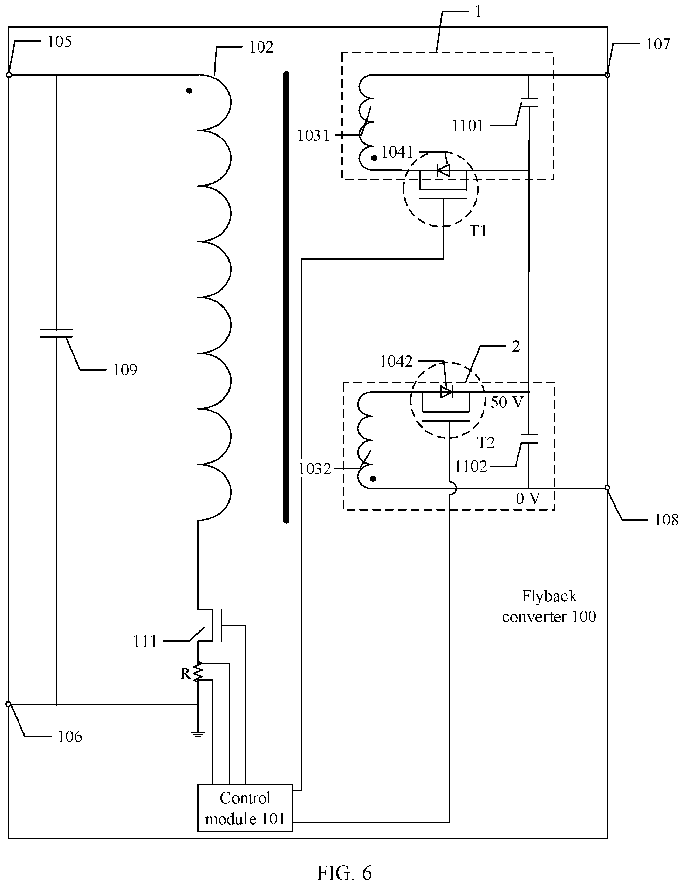

As shown in FIG. 6, the diode 1041 in the secondary winding module 1 is a body diode of a transistor T1. Specifically, a second electrode of the transistor T1 is coupled to the second electrode of the output capacitor 1101, a first electrode of the transistor T1 is coupled to the dotted terminal of the secondary winding 1031, and a control electrode of the transistor T1 is coupled to the control module. Referring to the drive signal shown in FIG. 3, the control module 101 keeps the transistor T1 cut off between the time point t1 and the time point t2. At the time point t2 or after the time point t2, the control module 101 controls the transistor T1 to be conducted, and the secondary winding 1031 may output electrical energy through the transistor T1.

It may be understood that, when the diode is conducted, there is a specific voltage drop between two ends of the diode, which is usually 0.7 V. Therefore, a specific loss is caused to electrical energy flowing through the diode. In view of this, the body diode in the transistor T1 is used as the diode in the secondary winding module, and the transistor T1 is conducted when the secondary winding outputs electrical energy, so that the electrical energy output by the secondary winding may be transmitted through a channel of the transistor T1. The channel of the transistor T1 causes a small loss to the electrical energy, which helps improve energy conversion efficiency of the flyback converter 100 as a whole. Based on the same concept, a diode in another secondary winding module may also be implemented by using a body diode in a transistor. For example, in FIG. 6, the diode 1042 in the secondary winding module 2 may be a body diode of a transistor T2. The control module 101 may further control the transistor T2 to be conducted at or after the second time point. These are not enumerated one by one in this embodiment of this application.

### Embodiment 4

As described above, the control module 101 may control the switching transistor 111 by using the periodic drive signal shown in FIG. 3. Generally, between the time point t1 and the time point t2, the voltage drop of the primary winding 102 gradually increases, and the excitation current (input current) flowing through the primary winding 102 gradually decreases. In a possible implementation, the control module 101 may detect a current value of the excitation current; and determine, after the current value of the excitation current decreases to a current threshold, that a current time point is the time point t2. It may also be understood that after the current value of the excitation current decreases to the current threshold, charging of the primary winding 102 is stopped.

In view of this, as shown in FIG. 6, the flyback converter 100 provided in this embodiment of this application may further include a sense resistor R, one end of the sense resistor R is coupled to the second electrode of the switching transistor 111, the other end of the sense resistor R is coupled to the input terminal 106, and the control module 101 is further coupled to the both ends of the sense resistor R. When the input terminal 106 is grounded, the control module 101 may be coupled to one end of the sense resistor R by using a wire, and the control module 101 may be coupled to the other end of the sense resistor R by using an internal grounding circuit.

A resistance value of the sense resistor R may be preset in the control module 101. During charging of the primary winding 102, the control module 101 may detect a voltage drop of the sense resistor R, and obtain, by using the voltage drop of the sense resistor R and the resistance value of the resistor R, a current value of the excitation current flowing through the primary winding 102, so that whether a current time point is the time point t2 may be determined based on the current value of the excitation current and a preset current threshold.

### Embodiment 5

It may be understood that an electronic device generally has a plurality of load circuits, and the flyback converter 100 may supply output electrical energy to the plurality of load circuits. For example, the flyback converter 100 may further supply output electrical energy to a load circuit 200 (not shown in FIG. 1).

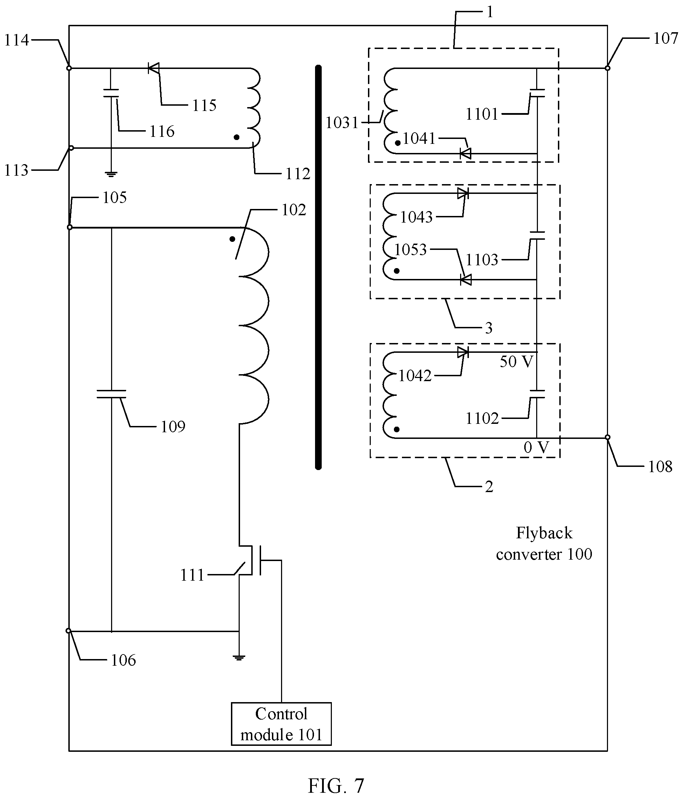

In view of this, as shown in FIG. 7, in a possible implementation, the flyback converter 100 may further include an auxiliary winding side. Specifically, the flyback converter 100 may further include an auxiliary winding 112, an output terminal 114, an output terminal 113, an auxiliary diode 115, and an auxiliary capacitor 116. An anode of the auxiliary diode 115 is coupled to a non-dotted terminal of the auxiliary winding 112, a cathode of the auxiliary diode 115 is coupled to a first electrode of the auxiliary capacitor 116, a dotted terminal of the auxiliary winding 112 is coupled to a second electrode of the auxiliary capacitor 116, the first electrode of the auxiliary capacitor 116 is coupled to the output terminal 114, the second electrode of the auxiliary capacitor 116 is coupled to the output terminal 113, and the auxiliary winding 112 is magnetically coupled to the primary winding 102.

In the electronic device, the output terminal 114 may be coupled to a positive electrode of the load circuit 200, and the output terminal 113 may be coupled to a negative electrode of the load circuit 200. The flyback converter 100 may supply output electrical energy to the load circuit 200 through the output terminal 114 and the output terminal 113. In the flyback converter 100 shown in FIG. 7, only one auxiliary winding is included on the auxiliary winding side. In this case, the auxiliary diode 115 only needs to implement a rectification function between the auxiliary winding 112 and the auxiliary capacitor 116. Therefore, the auxiliary winding side may alternatively use the following structure: The anode of the auxiliary diode 115 is coupled to the second electrode of the auxiliary capacitor 116, the cathode of the auxiliary diode 115 is coupled to the dotted terminal of the auxiliary winding, the non-dotted terminal of the auxiliary winding 112 is coupled to the first electrode of the auxiliary capacitor 116, the first electrode of the auxiliary capacitor 116 is coupled to the output terminal 114, the second electrode of the auxiliary capacitor 116 is coupled to the output terminal 113, and the auxiliary winding 112 is magnetically coupled to the primary winding 102.

It may be understood that, a function of the auxiliary winding side on which the auxiliary winding is located is similar to that of the secondary winding side. Therefore, a specific implementation of the auxiliary winding side is applicable not only to the structure on the secondary winding side shown in FIG. 2, but also to the structure on the secondary winding side shown in FIG. 4 to FIG. 6. Details are not described in this embodiment of this application.

The flyback converter and the electronic device provided in the embodiments of this application are described in detail above. It is clear that a person skilled in the art can make various modifications and variations to this application without departing from the scope of this application. To this end, this application is intended to cover these modifications and variations of this application provided that these modifications and variations fall within the scope of the claims of this application and equivalent technologies thereof.

## Claims

1. A flyback converter, comprising a first output terminal, a second output terminal, a primary winding, a first secondary winding module, and a second secondary winding module, wherein
the first secondary winding module comprises a first output capacitor, a first secondary winding, and a first diode, wherein a first end of the first secondary winding is coupled to a cathode of the first diode, a second end of the first secondary winding is separately coupled to a first electrode of the first output capacitor and the first output terminal, and an anode of the first diode is coupled to a second electrode of the first output capacitor;
the second secondary winding module comprises a second output capacitor, a second secondary winding, and a second diode and/or a third diode, wherein a first electrode of the second output capacitor is coupled to the second electrode of the first output capacitor, a second electrode of the second output capacitor is coupled to the second output terminal, an anode of the second diode is coupled to a second end of the second secondary winding, a cathode of the second diode is coupled to the first electrode of the second output capacitor, an anode of the third diode is coupled to the second electrode of the second output capacitor, and a cathode of the third diode is coupled to a first end of the second secondary winding;
the primary winding is separately magnetically coupled to the first secondary winding and the second secondary winding; and
the first output terminal is configured to be coupled to a positive electrode of a first load circuit, and the second output terminal is configured to be coupled to a negative electrode of the first load circuit.

2. The flyback converter according to claim 1, wherein the flyback converter further comprises a first input terminal, a second input terminal, a control module, and a switching transistor, wherein
a first end of the primary winding is coupled to the first input terminal, a second end of the primary winding is coupled to a first electrode of the switching transistor, a second electrode of the switching transistor is coupled to the second input terminal, and a control electrode of the switching transistor is coupled to the control module;
the first input terminal and the second input terminal are respectively configured to be coupled to a positive electrode and a negative electrode of an external power supply; and
the control module is configured to: control, at a first time point, the switching transistor to conduct a transmission path between the external power supply and the primary winding, and control, at a second time point after the first time point, the switching transistor to disconnect the transmission path between the external power supply and the primary winding.

3. The flyback converter according to claim 2, wherein the first diode is a body diode of a first transistor, a control electrode of the first transistor is coupled to the control module, a first electrode of the first transistor is coupled to the first end of the first secondary winding, and a second electrode of the first transistor is coupled to the second electrode of the first output capacitor; and
the control module is further configured to conduct the first transistor at a third time point, wherein the third time point is not earlier than the second time point.

4. The flyback converter according to claim 2, wherein the second diode is a body diode of a second transistor, a control electrode of the second transistor is coupled to the control module, a first electrode of the second transistor is coupled to the first electrode of the second output capacitor, and a second electrode of the second transistor is coupled to the second end of the second secondary winding, and
the control module is further configured to conduct the second transistor at a fourth time point, wherein the fourth time point is not earlier than the second time point; and/or
the third diode is a body diode of a third transistor, a control electrode of the third transistor is coupled to the control module, a first electrode of the third transistor is coupled to the second electrode of the second output capacitor, and a second electrode of the third transistor is coupled to the first end of the second secondary winding, and
the control module is further configured to conduct the third transistor at the fourth time point.

5. The flyback converter according to claim 3 or 4, wherein the control module is further configured to:
obtain a current value of an excitation current flowing through the primary winding; and
determine, after the current value of the excitation current decreases to a current threshold, that a current time point is the second time point.

6. The flyback converter of claim 5, wherein the flyback converter further comprises a sense resistor;
one end of the sense resistor is coupled to the second electrode of the switching transistor, the other end of the sense resistor is coupled to the second input terminal, and the control module is further coupled to the both ends of the sense resistor; and
the control module is specifically configured to:
obtain a voltage value of a resistance voltage of the sense resistor; and
calculate, based on a resistance value of the sense resistor and the voltage value of the resistance voltage of the sense resistor, a current value of a charging current flowing through the sense resistor.

7. The flyback converter according to any one of claims 1 to 6, wherein the flyback converter further comprises at least one third secondary winding module located between the first secondary winding module and the second secondary winding module, and each third secondary winding module comprises a third secondary winding, a fourth diode, and a third output capacitor; and
the first output capacitor, the third output capacitor of the at least one third secondary winding module, and the second output capacitor are successively connected in series, and for each third secondary winding module:
the third secondary winding is magnetically coupled to the primary winding, a first end of the third secondary winding is coupled to a cathode of the fourth diode, and a second end of the third secondary winding is coupled to a first electrode of the third output capacitor;
an anode of the fourth diode is coupled to a second electrode of the third output capacitor, and the first electrode of the third output capacitor is coupled to the second electrode of the first output capacitor, or the first electrode of the third output capacitor is coupled to a second electrode of a third output capacitor in another third secondary winding module; and
the second electrode of the third output capacitor is coupled to the first electrode of the second output capacitor, or the second electrode of the third output capacitor is coupled to a first electrode of a third output capacitor in another third secondary winding module.

8. The flyback converter according to claim 7, wherein the third secondary winding module further comprises a fifth diode, an anode of the fifth diode is coupled to the second end of the third secondary winding, and a cathode of the fifth diode is coupled to the first electrode of the third output capacitor.

9. The flyback converter according to any one of claims 1 to 8, wherein the flyback converter further comprises a third output terminal, a fourth output terminal, an auxiliary winding, an auxiliary diode, and an auxiliary capacitor, wherein
an anode of the auxiliary diode is coupled to a second end of the auxiliary winding, a cathode of the auxiliary diode is coupled to a first electrode of the auxiliary capacitor, a first end of the auxiliary winding is coupled to a second electrode of the auxiliary capacitor, the first electrode of the auxiliary capacitor is coupled to the third output terminal, the second electrode of the auxiliary capacitor is coupled to the fourth output terminal, and the auxiliary winding is magnetically coupled to the primary winding; or
the anode of the auxiliary diode is coupled to the second electrode of the auxiliary capacitor, the cathode of the auxiliary diode is coupled to the first end of the auxiliary winding, the second end of the auxiliary winding is coupled to the first electrode of the auxiliary capacitor, the first electrode of the auxiliary capacitor is coupled to the third output terminal, the second electrode of the auxiliary capacitor is coupled to the fourth output terminal, and the auxiliary winding is magnetically coupled to the primary winding; and
the third output terminal is configured to be coupled to a positive electrode of a second load circuit, and the fourth output terminal is configured to be coupled to a negative electrode of the second load circuit.

10. An electronic device, comprising a power circuit, a first load circuit, and the flyback converter according to any one of claims 1 to 8, wherein
the power circuit is coupled to a primary winding of the flyback converter, a positive electrode of the first load circuit is coupled to a first output terminal of the flyback converter, and a negative electrode of the first load circuit is coupled to a second output terminal of the flyback converter;
the power circuit is configured to input electrical energy to the flyback converter; and
the flyback converter is configured to convert the electrical energy input by the power circuit, and supply electrical energy obtained after the conversion to the first load circuit through the first output terminal and the second output terminal.

11. An electronic device, comprising a power circuit, a first load circuit, a second load circuit, and the flyback converter according to claim 9, wherein
the power circuit is coupled to a primary winding of the flyback converter, a positive electrode of the first load circuit is coupled to a first output terminal of the flyback converter, a negative electrode of the first load circuit is coupled to a second output terminal of the flyback converter, a positive electrode of the second load circuit is coupled to a third output terminal of the flyback converter, and a negative electrode of the second load circuit is coupled to a fourth output terminal of the flyback converter;
the power circuit is configured to input electrical energy to the flyback converter; and
the flyback converter is configured to convert the electrical energy input by the power circuit, supply some electrical energy obtained after the conversion to the first load circuit through the first output terminal and the second output terminal, and supply other electrical energy obtained after the conversion to the second load circuit through the third output terminal and the fourth output terminal.
